# EUROPÄISCHE PATENTSCHRIFT

(11) **EP 1 334 954 B1**
(45) Veröffentlichungstag und Bekanntmachung des Hinweises auf die Patenterteilung: **03.10.2007**
(21) Anmeldenummer: 03001154.8
(22) Anmeldetag: 21.01.2003
(51) Int. Cl.: C04B 7/43

(54) **Anlage zur Herstellung von Zementklinker**
Installation for manufacturing cement clinker
Installation de préparation de clinker de ciment

(30) Priorität: 25.01.2002 DE 10202776
(43) Veröffentlichungstag der Anmeldung: 13.08.2003
(73) Patentinhaber: KHD Humboldt Wedag GmbH, 51067 Köln (DE)
(72) Erfinder: Ramesohl, Hubert, 51427 Bergisch Gladbach (DE); Eckert, Carsten, 51061 Köln (DE)

(56) Entgegenhaltungen:
- EP-A- 0 582 394
- EP-A- 0 764 614
- WO-A-01/09548
- DE-A- 3 533 775

## Beschreibung

Die Erfindung betrifft eine Anlage zur Herstellung von Zementklinker aus Zementrohmehl, mit einem Zyklonschwebegas-Wärmetauschersystem als Rohmehlvorwärmer, mit einer mit Brennstoff und mit Tertiärluft aus dem Klinkerkühler versorgten Vorcalcinierstufe, mit einer Sinterstufe in Gestalt eines Drehrohrofens und mit dem materialflussseitig nachgeschalteten Klinkerkühler, und mit einem Drehtrommelreaktor zur Schwelung/Verbrennung von Sekundärbrennstoffen mit Einleitung der Schwelgase/Verbrennungsabgase in den Calcinator und Verwertung der festen Reststoffe des Reaktors in der Zementklinkerproduktionslinie.

Aus der EP-A-0 764 614 ist eine Zementklinkerproduktionslinie bekannt, mit einem neben der Calciniereinrichtung installierten, als Nebenreaktor betriebenen separaten Schachtvergaser, in dem grobstückige Abfallstoffe insbesondere Altreifen vergast werden sollen. Dabei wird der Schachtvergaser von oben mit den Altreifen und mit einem Teil der vom Klinkerkühler kommenden Tertiärluft als Vergasungsmittel beschickt. Das im Schachtvergaser entstehende Produktgas wird als Brenngas in den Calcinator geleitet, und die Reststoffe der im Schachtvergaser vergasten Altreifen werden durch eine mechanische Abstoßvorrichtung in den Drehofeneinlaufschacht transportiert. Der Vergasungsprozess im Schachtvergaser kann erheblichen Schwankungen unterliegen, da die im Schachtvergaser aufeinandergestapelten Altreifen während ihrer thermischen Behandlung nicht umgeschichtet werden. Eine Einführung von Rohmehl in den die Abfallstoffe insbesondere Altreifen thermisch behandelnden Schachtvergaser findet nicht statt.

Aus der WO 01/09548 ist eine Zementklinkerproduktionslinie bekannt, neben deren Calcinator ein separater Reaktor installiert ist, der wiederum von oben mit Abfallstoffen befüllt wird, die im Reaktor mit Tertiärluft aus dem Klinkerkühler verbrannt werden sollen. In den Reaktor wird ebenfalls von oben auch ein Teilstrom des Zementrohmehls eingeführt. Die Abfallstoffe und der Rohmehlteilstrom sollen im Verbrennungsreaktor auf einer oberhalb des Reaktorbodens installierten drehbaren Scheibe abgelegt werden, und durch Drehung der Scheibe sollen die thermisch behandelten Feststoffe ausgeschleust und in den Calcinator bzw. in den Drehofeneinlauf eingeschleust werden, und das Verbrennungsabgas wird ebenfalls in den Calcinator eingeführt. Eine Vermischung der Abfallstoffe, besonders wenn dieser grobstückig vorliegt, findet in dem bekannten Verbrennungsreaktor ebenfalls nicht statt, so dass nicht von gleichmäßigen Verbrennungsbedingungen und damit nicht von einer gleichmäßigen Rohmehl-Vorcalcinierung auszugehen ist.

Aus der DE-C-35 33 775 ist es bei einer Anlage zur Herstellung von Zementklinker aus Rohmehl mit Verwertung heizwerthaltiger Abfallstoffe bekannt, die Abfallstoffe nach ihrer Trocknung in einen mit Drehofenabgas und einem Teilstrom der Tertiärluft betriebenen Schwelofen zur Pyrolyse bzw. Teilverbrennung der Abfallstoffe einzuführen, das Pyrolysegas in den Calcinator einzuführen und den festen Pyrolyserückstand nach seiner Aufbereitung und Homogenisierung wenigstens teilweise in den Drehrohrofen einzuführen. Dabei kann der Abfallstoff-Schwelofen auch als Drehrohrofen ausgebildet sein. Eine Einführung von Zementrohmehl in den Schwelofen findet nicht statt.

Aus der DE-A-33 20 670, DE-A-34 11 144 und DE-A-35 20 447 ist es bei einer Anlage zur Herstellung von Zementklinker mit Verwertung heizwerthaltiger Abfallstoffe ebenfalls bekannt, die Abfallstoffe in einem separaten Drehofen zu verschwelen bzw. zu verbrennen und das Schwelgas/Abgas bei der thermischen Rohmehlbehandlung zu nutzen. Jedoch wird in den Schwelofen/Verbrennungsofen keinerlei Zementrohmehl eingeführt.

Aus der den Oberbegriff des Anspruchs 1 bildenden EP-A-0 582 394 ist es bei einer Anlage zur Herstellung von Zementklinker aus Rohmehl mit Verwertung von Abfallstoffen bekannt, diese innerhalb einer eigenen Drehtrommel unter Einstellung eines Temperaturniveaus zwischen 830 und 880° C thermisch zu zersetzen, und zwar unter Nutzung der Hitze eines in die Drehtrommel eingebrachten Teilstromes heißen Rohmehls, das in dem mit Brennstoff versorgten Calcinator bereits calciniert worden ist. Dabei ist aber die Initiierung der Zersetzung der Abfallstoffe im Drehtrommel-Reaktor einzig und allein mit Hilfe des heißen calcinierten Rohmehls je nach Zündwilligkeit der oft sehr schwer brennbaren Abfallstoffe nicht sicher. Sollte der die Abfallstoff-Zersetzungskammer in Gestalt der Drehtrommel verlassende Rohmehlteilstrom nicht ausreichend calciniert worden sein, erhält dieser keine Gelegenheit, in die mit Brennstoff und Tertiärluft aus dem Klinkerkühler versorgte Calcinierstufe eingeführt zu werden, weil sämtliche Feststoffe aus der Abfallstoff-Zersetzungskammer, nämlich die festen Rückstände aus der Abfallstoff-Zersetzung als auch der Rohmehlteilstrom direkt in den Drehofen eingeleitet werden, während in die Calcinierstufe nur die gasförmigen Produkte aus der Abfallstoff-Zersetzungskammer eingeleitet werden.

Bei der Schwelung/Verbrennung von Abfallstoffen, insbesondere auch grobstückigen Abfallstoffen in einem Reaktor macht es nicht nur Schwierigkeiten, die Zersetzung der Abfallstoffe zu initiieren und gleichmäßige Bedingungen für die thermische Behandlung zu schaffen, sondern auch das Auftreten von Temperaturspitzen zu vermeiden, die zu unerwünschten Feststoffanbackungen im Reaktor führen können.

Der Erfindung liegt die Aufgabe zugrunde, eine Zementklinkerproduktionslinie der oben beschriebenen Art mit einem dem Drehrohrofen vorgeschalteten Calcinator mit Einbezug eines Drehtrommelreaktors zu schaffen mit dem Ziel, einerseits im Trommelreaktor auch grobstückige Sekundärbrennstoffe auch unterschiedlicher Stoffart und Stückgröße sicher verbrennen und andererseits die dabei frei werdende Wärmeenergie gleichmäßig und wirkungsvoll auf das Zementrohmehl übertragen zu können, d. h. eine sichere Reststoffentsorgung und eine wärmewirtschaftlich günstige Zementklinkerherstellung in einer einzigen integrierten Zementklinkerproduktionslinie verwirklichen zu können.

Diese Aufgabe wird gemäß der Erfindung mit einer ZementklinkerProduktionslinie mit den Merkmalen des Anspruchs 1 gelöst. Vorteilhafte Ausgestaltungen der Erfindung sind in den Unteransprüchen angegeben.

Charakteristisch für die erfindungsgemäße Anlage zur Herstellung von Zementklinker mit in deren Calcinierstufe eingebundenem Drehtrommelreaktor zur Schwelung/Verbrennung und damit Entsorgung von reaktionsträgen Sekundärbrennstoffen ist zunächst einmal, dass in die Guteinlauföffnung des Drehtrommelreaktors abgesehen von den eingeführten schwer zündbaren Sekundärbrennstoffen und abgesehen von dem vom Klinkerkühler kommenden Tertiärluftteilstrom auch ein Zündbrenner und ein Teilstrom des insbesondere bereits vorgewärmten Rohmehls einmündet, womit wenigstens die folgenden Vorteile verbunden sind:
Die Initiierung der Zersetzung bzw. Schwelung/Verbrennung der kontinuierlich zugeführten reaktionsträgen Sekundärbrennstoffe bewirkt der nicht reaktionsträge Brennstoff des Zündbrenners. Im Drehtrommelreaktor erfolgt eine ständige Umwälzung und Vermischung des Sekundärbrennstoffs und des bei seiner Einführung ggf. schon sehr heißen Rohmehls, wodurch sich die Sekundärbrennstoffe gleichmäßig verteilen und wirkungsvoll in ihre Umsetzungsprodukte umsetzen lassen. Dabei wird die frei werdende Wärmeenergie wenigstens zum Teil innerhalb des Drehtrommelreaktors selbst unmittelbar und gleichmä-ßig auf den Rohmehlteilstrom übertragen, wodurch dieser wenigstens zum Teil schon innerhalb der Trommel hochgradig calciniert werden kann, sofern die Temperatur im Drehtrommelreaktor auf einem Niveau von wenigstens etwa 800 bis 850° C gehalten wird. Infolge des innigen Gemisches der schwelenden/verbrennenden Sekundärbrennstoffe wie z. B. ganze Altreifen und des Rohmehls ist die Möglichkeit eröffnet, dass die Sekundärbrennstoffe flammenlos oxidieren, so dass in der Drehtrommel Temperaturspitzen nicht auftreten, wodurch die Gefahr von Feststoffanbackungen in der Drehtrommel minimiert ist. Außerdem kann mit der Rohmehlmenge, die in den Drehtrommelreaktor zudosiert wird, die sich im Reaktor einstellende Temperatur so gesteuert werden, dass eine Schmelzphasenbildung der Feststoffe nicht auftritt. Zu diesem Zweck kann in den Drehtrommelreaktor sogar ein nicht vorgewärmter Rohmehlteilstrom eingeführt werden. Außerdem ist die Möglichkeit eröffnet, dass schon beginnend im Drehtrommelreaktor bestimmte Schadstoffe der Sekundärbrennstoffe am reaktiven Zementrohmehl gebunden werden.

Es besteht auch die Möglichkeit, den Innenmantel des Drehtrommelreaktors mit Hubelementen auszustatten.

Das Feststoffaustrittsende des Drehtrommelreaktors steht über eine Leitung zum Abzug des Schwelgas/Verbrennungsabgas-FeststoffGemisches, wobei das Feststoffgemisch aus dem festen Verbrennungsrückstand, z. B. Schlacke sowie aus dem ggf. vorcalcinierten Rohmehl besteht, mit dem von unten nach oben aufsteigenden Tertiärluftkanal und/oder Drehofenabgaskanal des Calcinators in Verbindung. Grobstückige Reststoffe des Drehtrommelreaktors, welche von der im Calcinator von unten nach oben strömenden Suspension nicht nach oben pneumatisch förderbar sind, werden in den Guteinlauf des Drehrohr-Klinkerofens eingeleitet und im Drehrohr-Klinkerofen in den Klinker eingebunden, so dass aus dem gesamten Prozess keinerlei Reststoffe übrig bleiben.

Es besteht aber auch die Möglichkeit, dass das aus dem Drehtrommelreaktor austretende Feststoffgemisch, wenigstens deren grobkörnigen Bestandteile, unmittelbar in die Einlaufkammer des Drehrohr-Klinkerofens und/oder direkt in den Klinkerkühler eingeleitet werden.

In das Feststoffeintrittsende des Drehtrommelreaktors wird zusätzlich ein Zünd- bzw. Startbrenner eingeführt, der zum Starten des Drehtrommelreaktors mit einem gut zündbaren Brennstoff versorgt wird. Die Abgase des Drehtrommelreaktors werden entweder als Rauchgas aus der Verbrennung oder wahlweise Brenngas aus der Pyrolyse/Schwelung der Sekundärbrennstoffe in den Calcinator und/oder auch in die Steigleitung zwischen Drehofeneinlaufkammer und Calcinator eingeleitet, wo sie zur weiteren Vorcalcination des Zementrohmehls genutzt werden.

In den Drehtrommelreaktor kann ferner auch ein schadstoffhaltiger Teilstrom des Drehofenabgases eingeführt sein, dessen Schadstoffe wenigstens zum Teil im Drehtrommelreaktor an den darin befindlichen heißen Feststoffen zersetzt und/oder angelagert werden können, wobei es sich bei den Schadstoffen des Bypassgases auch um Dioxine und/oder Furane etc. handeln kann.

Die Erfindung und deren weitere Merkmale und Vorteile werden anhand des in der Zeichnung schematisch dargestellten Ausführungsbeispieles näher erläutert.

Es zeigt:
- Fig. 1:: eine erste Ausführungsform der erfindungsgemäßen Zementklinkerproduktionslinie mit integrierter Verwertung/Entsorgung von Sekundärbrennstoffen,
- Fig. 2:: eine zweite Ausführungsform der Anlage der Fig. 2, und
- Fig. 3: eine dritte Variante der Anlage der Fig. 1.

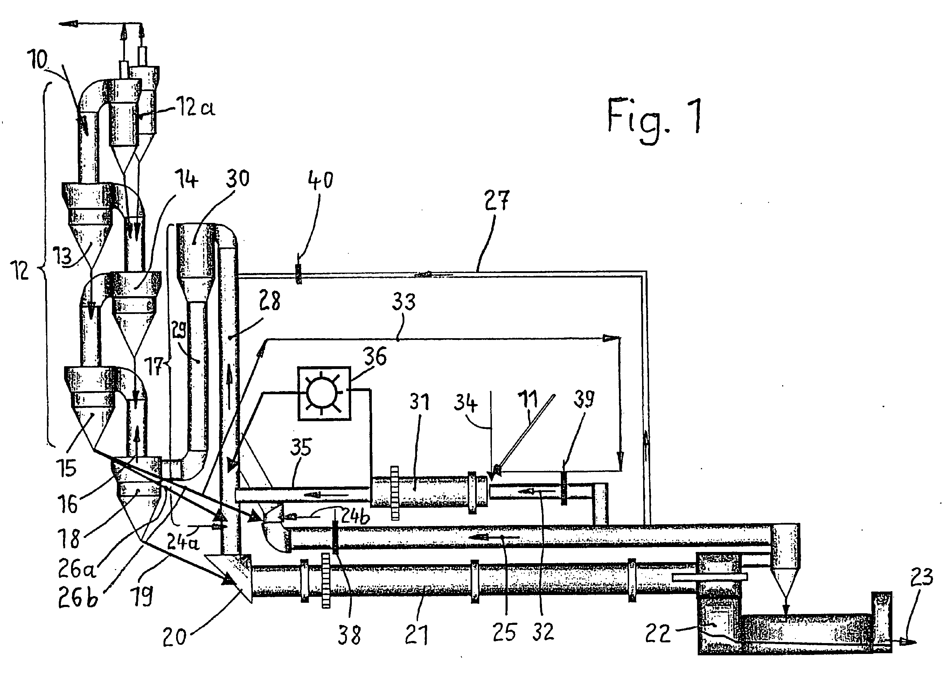

Gleiche Teile der Anlagen Fig. 1 bis 3 haben gleiche Bezugsziffern.

Figur 1 zeigt schematisch eine Anlage zur Herstellung von Zementklinker aus Zementrohmehl 10 mit integrierter Verwertung/Entsorgung von Sekundärbrennstoffen 11.

Das Zementrohmehl 10 wird oben in die als Zyklonschwebegas-Wärmetauschersystem ausgebildete Vorwärmstufe 12 aufgegeben, wo es nacheinander die Zyklonstufen 12a, 13, 14, 15 im kombinierten Gleich-/Gegenstrom zum heißen Abgas 16 einer Vorcalcinationsstufe 17 durchwandert, um im untersten Zyklon 18 vom heißen Abgasstrom 16 abgetrennt und als hochgradig (z. B. 95 %) calciniertes Zementrohmehl 19 in die Einlaufkammer 20 des Drehrohrofens 21 eingeführt zu werden, in dessen Sinterzone es zu Zementklinker gebrannt wird, der anschließend in einem Klinkerkühler 22, z. B. Rostkühler abgekühlt wird. Der abgekühlte Zementklinker verlässt den Kühler 22 bei 23.

In der mit Brennstoff 24a, 24b und Tertiärluft 25 aus dem Klinkerkühler 22 versorgten Vorcalcinationsstufe 17 wird das aus der zweituntersten Zyklonstufe 15 austretende vorgewärmte Zementrohmehl 26a, 26b hochgradig calciniert. Dabei kann der Brennstoff 24a an wenigstens einer sogenannten DeNoₓ-Brennstelle in der vom Drehrohrofen 21 kommenden Ofenabgassteigleitung mit Vorteil unterstöchiometrisch verbrannt werden zwecks Erzeugung einer CO-haltigen Reduktionszone zur Reduktion des im Drehofenabgas enthaltenen Schadstoffs NOₓ, während der Brennstoff 24b in der vom Klinkerkühler kommenden Tertiärluft 25 mit Vorteil überstöchiometrisch verbrannt wird. Der Restausbrand des in der NOₓ-Reduktionszone zunächst überschüssig gebliebenen CO und ggf. unverbrannt gebliebener Kohlenwasserstoffe kann durch Sauerstoff aus überschüssiger Tertiärluft 25 sowie ggf. aus einem weiteren Tertiärluft-Teilstrom erfolgen, der über die Tertiärluft-Teilstromleitung 27 von der Tertiärluftleitung 25 abgezweigt und in einen höher gelegenen Bereich der Calcinierstufe 17 eingeführt ist. Zwecks intensiver Vermischung der Reaktionspartner kann im Bereich der Strömungsumlenkung der schwanenhalsförmigen Vorcalcinationsstufe 17 vom aufsteigenden Rohrleitungsast 28 um etwa 180° in den absteigenden Rohrleitungsast 29 noch eine Wirbelkammer bzw. Mischkammer 30 angeordnet sein, in der die Gas-Feststoff-Suspension intensiv vermischt wird, was einen vollständigen Restausbrand ggf. unverbrannt gebliebener Brennstoffbestandteile im absteigenden Ast 29 der Vorcalcinationsstufe 17 zur Folge hat.

Die Sekundärbrennstoffe 11, bei denen es sich auch um grobstückige Brennstoffe wie Autoreifen, große Holzstücke, Kanister etc. handeln kann, werden in das Feststoffeintrittsende eines insbesondere auf nur zwei Laufrollenstationen gelagerten Drehtrommelreaktors 31 eingeführt. In dasselbe Eintrittsende mündet auch eine weitere von der Tertiärluftleitung 25 abgezweigte Tertiärluftzweigleitung 32 sowie erfindungsgemäß eine Zementrohmehl-Zweigleitung 33 aus dem Rohmehlvorwärmer 12 ein. Zum Start der Reaktion im Drehtrommelreaktor 31 mündet in diesen ein Zündbrenner 34 ein, durch den der reaktionsträge Sekundärbrennstoff 11 gezündet wird, der dann je nach zugeführter Menge von Tertiärluft 32 im Drehtrommelreaktor 31 vergast oder verbrannt wird. Durch die Rotation des Drehtrommelreaktors 31 wird eine ständige Umwälzung der Feststoffe, eine gute Vermischung der Sekundärbrennstoffe 11 mit dem ZementrohmehlTeilstrom 33 sowie eine gleichmäßige Wärmeübertragung und damit verbundene Vorcalcinierung dieses Rohmehlteilstromes erreicht. Über die Menge des Zementrohmehlteilstrom 33, der in den Drehtrommelreaktor 31 eingeführt wird, ist eine wirkungsvolle Temperatursteuerung dieses Reaktors gegeben, auch Steuerung in der Richtung, dass Schmelzphasenbildungen und Ansatzbildungen im Drehtrommelreaktor nicht auftreten.

Es besteht auch die Möglichkeit, den Sekundärbrennstoff 11 und den Rohmehlteilstrom 33 vor Einführung in den Drehtrommelreaktor in einem vorgeschalteten Aggregat vorzuvermischen.

Am Feststoffaustragsende des Drehtrommelreaktors 31 wird über Leitung 35 das Schwelgas/Verbrennungsabgas-Feststoff-Gemisch abgezogen, wobei es sich beim Feststoff um ein Gemisch aus festen Reststoffen der Schwelung/Verbrennung, z. B. Schlacke, und vorcalciniertem Zementrohmehl handelt. Die gröberen Bestandteile dieses Feststoffgemisches können ggf. nach Durchlaufen einer Zerkleinerungsmaschine 36 über die Drehrohrofenabgassteigleitung in die Drehofeneinlaufkammer 20 eingeführt werden, während das Schwelgas/Verbrennungsabgas sowie die feinkörnigen Bestandteile des ausgetragenen Feststoffgemisches, insbesondere der im Reaktor 31 thermisch behandelte Rohmehlteilstrom 33 über Leitung 35 direkt in den aufsteigenden Ast 28 der Calcinierstufe 17 eingeführt werden kann.

Mit besonderem Vorteil ist der Drehtrommelreaktor 31 zur Schwelung/Verbrennung der Sekundärbrennstoffe 11 parallel zum Drehrohr-Klinkerofen 21 und oberhalb von diesem installiert, und zwar im Bereich des Vorcalcinators 17. Damit ergeben sich relativ kurze Verbindungswege zwischen dem Drehtrommelreaktor 31 und dem Vorcalcinator 17 sowie der Drehofen-Einlaufkammer 20, und durch die entsprechende Höhenlage des Drehtrommelreaktors 31 können die Rohmehlzufuhr in den Trommelreaktor sowie der Feststoffaustrag aus dem Trommelreaktor ohne eigene Fördereinrichtungen nur durch Schwerkrafttransport erfolgen.

Zur Steuerung der Zementklinkerproduktionslinie, insbesondere zur Verteilung der Verbrennungsluftströme sind in der Tertiärluftleitung 25 und in deren Zweigleitungen 32 und 27 Regelorgane 38, 39, 40 installiert.

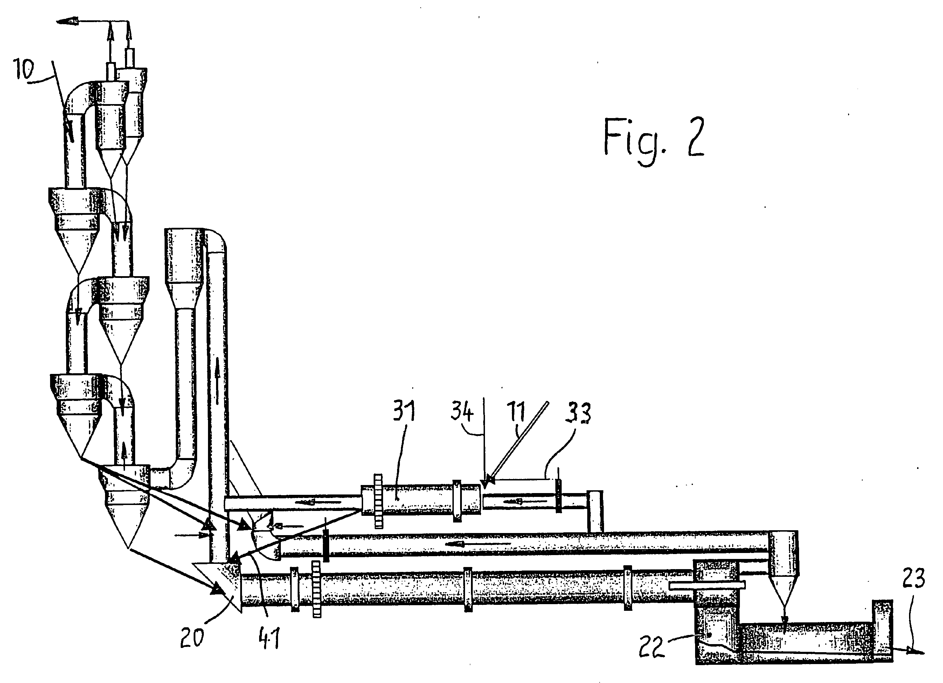

Von Figur 1 unterscheidet sich Figur 2 dadurch, dass dort die aus dem Drehtrommelreaktor 31 ausgetragenen festen Reststoffe, z. B. die Schlacke über Leitung 41 direkt in die Drehofeneinlaufkammer 20 eingeführt wird.

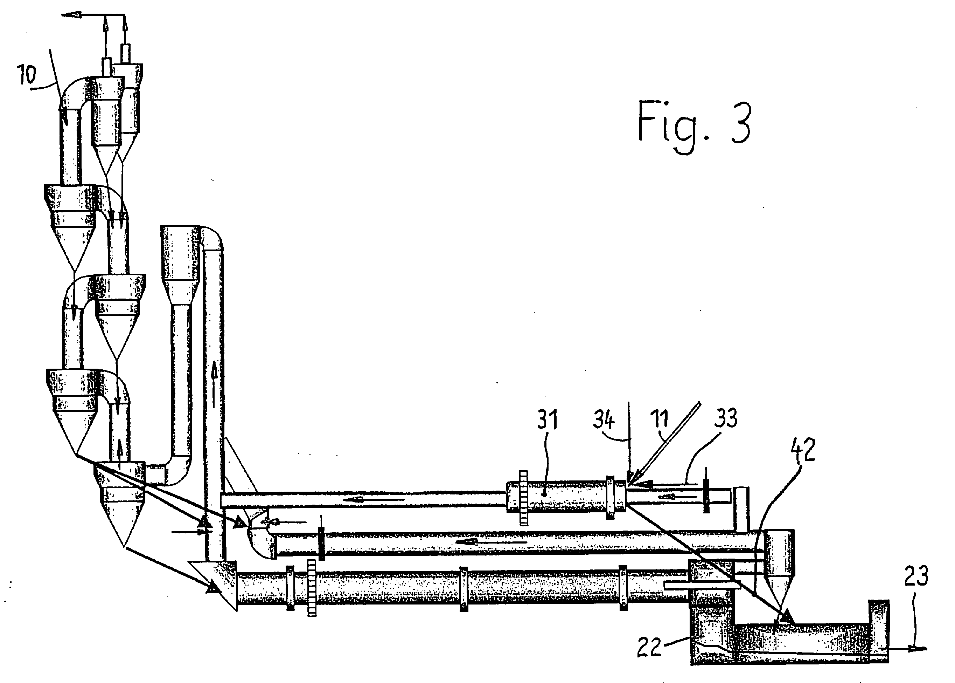

Beim Ausführungsbeispiel der Figur 3 werden die aus dem Drehtrommelreaktor 31 ausgetragenen festen Reststoffe, z. B. die Schlacken über Leitung 42 direkt in den Klinkerkühler 22 eingeführt, d. h. diese Schlacken werden dem Zementklinker direkt zugeschlagen, bevor dieser zur Zementmahlung gelangt

## Patentansprüche

1. Anlage zur Herstellung von Zementklinker aus Zementrohmehl, mit einem Zyklonschwebegas-Wärmetauschersystem als Rohmehlvorwärmer (12), mit einer mit Brennstoff und Tertiärluft aus dem Klinkerkühler (22) versorgten Calcinierstufe (17), mit einer Sinterstufe in Gestalt eines Drehrohrofens (21) und mit dem materialflussseitig nachgeschalteten Klinkerkühler, und mit einem zur Schwelung/Verbrennung von Sekundärbrennstoffen (11) dienenden Drehtrommelreaktor (31), an dessen Feststoffeintrittsende der schwer zündbare bzw. schwer brennbare Sekundärbrennstoff (11), eine Teilstromleitung (32) der vom Klinkerkühler (22) zum Calcinator (17) geführten Tertiärluft und eine Zementrohmehlteilstromleitung (33) einmünden, wobei das Austragsende des Drehtrommelreaktors (31) zwecks Verwertung der Schwelgase/Verbrennungsabgase und des Feststoffgemisches in der Zementklinkerproduktionslinie mit dieser über wenigstens eine Leitung in Verbindung steht,
gekenntzeichnet durch folgende Merkmale:
a) in den Drehtrommelreaktor (31) mündet am Feststoffeintrittsende auch ein Zündbrenner (34) ein, durch den der reaktionsträge Sekundärbrennstoff (11) gezündet und je nach zugeführter Menge von Tertiärluft (32) im Drehtrommelreaktor (31) vergast/verbrannt wird,
b) die Zementrohmehlteilstromleitung (33) ist aus dem Rohmehlvorwärmer (12) von demjenigen Strom vorgewärmten Rohmehls abgezweigt, der den Rohmehlvorwärmer (12) verlässt und in den Vorcalcinator (17) eintritt,
c) das Austragsende des Drehtrommelreaktors (31) steht mit dem Calcinator (17) über eine Leitung (35) in Verbindung, über welche das im Drehtrommelreaktor (31) gebildete Schwelgas/Verbrennungsgas sowie der thermisch behandelte Rohmehlteilstrom (33) in den aufsteigenden Ast (28) des Calcinators (17) eingeführt werden.

2. Anlage nach Anspruch 1,
**dadurch gekennzeichnet, dass** der Drehtrommelreaktor zur Schwelung/Verbrennung der Sekundärbrennstoffe (11) parallel zum Drehrohr-Klinkerofen (21) oberhalb von diesem installiert ist.

3. Anlage nach Anspruch 1,
**dadurch gekennzeichnet, dass** der Drehtrommelreaktor (31) auf zwei Laufrollenstationen gelagert ist.

4. Anlage nach Anspruch 1,
**dadurch gekennzeichnet, dass** der Innenmantel des Drehtrommelreaktors (31) Hubelemente aufweist.

5. Anlage nach Anspruch 1,
**dadurch gekennzeichnet, dass** von der Tertiärluftleitung (25) eine weitere Tertiärluft-Teilstromleitung (27) abgezweigt ist, die unter Umgehung des Drehtrommelreaktors (31) in einen höher gelegenen Bereich des Calcinators (17) einmündet.

6. Anlage nach einem der Ansprüche 1 bis 4,
**dadurch gekennzeichnet, dass** in den Drehtrommelreaktor (31) zur Verwertung/Entsorgung der Sekundärbrennstoffe (11) auch ein schadstoffhaltiger Teilstrom des Abgases des Drehrohrofens (21) eingeführt ist.

## Claims

1. Plant for the production of cement clinker from cement raw meal with a cyclone suspension type heat exchanger system as raw meal preheater (12), with a calcining stage (17) supplied with fuel and tertiary air from the clinker cooler (22), with a sintering stage in the form of a rotary tube kiln (21) and with the clinker cooler attached downstream on the material flow side, and with a rotary drum reactor (31) serving for the low temperature carbonization/combustion of secondary fuels (11), into the solids inlet end whereof there discharge the poorly ignitable or poorly combustible secondary fuel (11), a partial stream.pipe (32) of the tertiary air passed from the clinker cooler (22) to the calciner (17) and a cement raw meal partial stream pipe (33), wherein, for the purpose of utilization of the low temperature carbonization gases/combustion waste gases and of the solids mixture in the cement clinker production line, the discharge end of the rotary drum reactor (31) is connected with this via at least one pipe,
**characterized by** the following features:
a) there also discharges into the rotary drum reactor (31) at the solids inlet end a pilot burner (34), by means of which the poorly reactive secondary fuel (11) is ignited and, depending on the quantity of tertiary air (32) supplied, is gasified/burnt in the rotary drum reactor (31),
b) outside the raw meal preheater (12), the cement raw meal partial stream pipe (33) is branched off from the stream of preheated raw meal that leaves the raw meal preheater (12) and enters the precalciner (17),
c) the outlet end of the rotary drum reactor (31) is connected to the calciner (17) via a pipe (35) via which the low temperature carbonization gas/combustion gas formed in the rotary drum reactor (31) and the heat treated raw meal partial stream (33) are passed into the rising branch (28) of the calciner (17).

2. Plant according to Claim 1,
**characterized in that** the rotary drum reactor for the low temperature carbonization/combustion of the secondary fuels (11) is installed parallel to the rotary tube clinker kiln (21) and above this.

3. Plant according to Claim 1,
**characterized in that** the rotary drum reactor (31) is journalled on two roller supports.

4. Plant according to Claim 1,
**characterized in that** the inner casing of the rotary drum reactor (31) has lifting elements.

5. Plant according to Claim 1,
**characterized in that** a further tertiary air partial stream pipe (27) is branched off from the tertiary air pipe (25), which, bypassing the rotary drum reactor (31), discharges into a higher-positioned region of the calciner (17).

6. Plant according to one of Claims 1 to 4,
**characterized in that** a pollutant-containing partial stream of the waste gas from the rotary tube kiln (21) is also introduced into the rotary drum reactor (31) for the utilization/disposal of the secondary fuels (11).

## Revendications

1. Installation de fabrication de clinker de ciment à partir de farine brute de ciment, qui présente pour le gaz de mise en suspension du cyclone un système d'échangeur de chaleur constitué d'un préchauffeur (12) de farine brute, d'un étage de calcination (17) alimenté en combustible et en air tertiaire qui provient du refroidisseur (22) de clinker, d'un étage de frittage qui présente la forme d'un four tubulaire rotatif (21) et d'un refroidisseur de clinker raccordé en aval dans la direction d'avancement de la matière, ainsi qu'un réacteur (31) à tambour rotatif qui sert à cokéfier et/ou brûler des combustibles secondaires (11) et à l'extrémité d'entrée des solides duquel débouchent le combustible secondaire (11) difficile à allumer ou difficile à brûler, un conduit (32) d'écoulement partiel de l'air tertiaire amené du refroidisseur de clinkers (22) au calcinateur (17) et un conduit (33) d'écoulement partiel de farine brute de ciment, l'extrémité d'extraction du réacteur (31) à tambour rotatif communiquant par au moins un conduit avec la ligne de production de clinker de ciment pour renvoyer les gaz de cokéfaction et/ou de combustion et le mélange de solides dans la ligne de production de clinkers de ciment,
**caractérisée par** les caractéristiques suivantes :
a) à l'extrémité d'entrée des solides du réacteur (31) à tambour rotatif débouche également un brûleur d'allumage (34) par lequel le combustible secondaire (11) lent à réagir est allumé et est gazéifié ou brûlé dans le réacteur (31) à tambour rotatif en fonction de la quantité d'air tertiaire (32) qui y est apportée,
b) l'écoulement préchauffé de farine brute qui quitte le préchauffeur (12) de farine brute et qui pénètre dans le pré-calcinateur (17) est dérivé par le conduit (33) d'écoulement partiel de farine brute de ciment du préchauffeur (12) de farine brute et
c) l'extrémité de sortie du réacteur (31) à tambour rotatif est reliée au calcinateur (17) par un conduit (35) par lequel le gaz de cokéfaction ou de combustion formé dans le réacteur (31) à tambour rotatif ainsi que l'écoulement partiel de farine brute (33) traitée thermiquement sont introduits dans la branche montante (28) du calcinateur (17).

2. Installation selon la revendication 1, **caractérisée en ce que** le réacteur à tambour rotatif de cokéfaction ou de combustion des combustibles secondaires (11) est installé parallèlement au four tubulaire rotatif à clinkers (21) et au-dessus de ce dernier.

3. Installation selon la revendication 1, **caractérisée en ce que** le réacteur (31) à tambour rotatif est monté sur deux postes à galets de roulement.

4. Installation selon la revendication 1, **caractérisée en ce que** l'enveloppe intérieure du réacteur (31) à tambour rotatif présente des éléments de relèvement.

5. Installation selon la revendication 1, **caractérisée en ce que** du conduit (25) d'air tertiaire est dérivé un autre conduit (27) d'écoulement partiel d'air tertiaire qui débouche dans une zone plus élevée du calcinateur (17) en contournant le réacteur (31) à tambour rotatif.

6. Installation selon l'une des revendications 1 à 4, **caractérisée en ce qu'**un écoulement partiel des gaz d'échappement contenant des produits nocifs du four tubulaire rotatif (21) est également injecté dans le réacteur (31) à tambour rotatif de recyclage et d'élimination de combustibles secondaires (11).
